Europäisches Patentamt

European Patent Office

Office européen des brevets

(11) Veröffentlichungsnummer : **0 096 233**
**B1**

(12)     EUROPÄISCHE PATENTSCHRIFT

(45) Veröffentlichungstag der Patentschrift :
30.12.86

(51) Int. Cl.⁴ : **F 16 J 15/34**, F 16 J 15/40

(21) Anmeldenummer : 83104617.2

(22) Anmeldetag : 11.05.83

(54) **Wellendichtung mit aktiv-magnetisch geregeltem Dichtspalt.**

(30) Priorität : 05.06.82 DE 3221380
            24.07.82 DE 3227796

(43) Veröffentlichungstag der Anmeldung :
21.12.83 Patentblatt 83/51

(45) Bekanntmachung des Hinweises auf die Patenterteilung : 30.12.86 Patentblatt 86/52

(84) Benannte Vertragsstaaten :
CH DE FR GB IT LI NL

(56) Entgegenhaltungen :
AT-B-    210 691
CH-A-    428 351
DE-A- 1 675 354
DE-A- 2 134 964
DE-A- 2 444 544
DE-A- 2 515 316
DE-B- 2 320 681
DE-U- 7 022 953
FR-A- 2 232 965
GB-A- 1 208 554

(73) Patentinhaber : **MAN GUTEHOFFNUNGSHÜTTE**
**GMBH**
**Bahnhofstrasse, 66**
**D-4200 Oberhausen 11 (DE)**

(72) Erfinder : **Kotzur, Joachim, Dr.-Ing.**
**Holtkampstrasse 18**
**D-4200 Oberhausen 11 (DE)**
Erfinder : **Reinersmann, Hans-Hermann, Ing.**
**Twentmannstrasse 169**
**D-4300 Essen 12 (DE)**
Erfinder : **Albers, Rolf**
**Dinnendahlstrasse 61**
**D-4200 Oberhausen 11 (DE)**
Erfinder : **Aschenbruck, Emil**
**Sterkrader Strasse 495a**
**D-4100 Duisburg 11 (DE)**
Erfinder : **Neuhaus, Günter**
**Walsumermarkstrasse 254**
**D-4200 Oberhausen 14 (DE)**

## Beschreibung

Die Erfindung betrifft eine Wellendichtung mit radialem ebenen Dichtspalt, der von einem mit der Welle umlaufenden Dichtring und einem über ein allseitig nachgiebiges und zugleich dichtendes Element am Dichtungsgehäuse befestigten nichtumlaufenden Dichtring gebildet wird, wobei das Dichtungsmedium durch Zuführbohrungen zud zugehörige Verteilungstaschen im nichtumlaufenden Dichtring und/oder am äußeren oder inneren Umfang des umlaufenden Dichtringes in den Dichtspalt strömt.

Es sind bereits Wellendichtungen bekannt, bei denen die zur Herstellung der Abdichtung eines umlaufenden Teils gegen einen nichtdrehbaren Teil an einer zwei Räume voneinander trennenden Wand, die zur Herstellung der Abdichtung erforderlich ist, die strömende Menge an Dichtungsmedium wesentlich herabgesetzt werden soll (DE-A-2 134 964). Dabei ist der nichtdrehbare Dichtring in allen Richtungen gegenüber dem nichtdrehbaren Teil frei beweglich und mit diesem durch eine oder mehrere verformbare dichtende Wände verbunden.

Nachteilig ist bei dieser Ausführung, daß es bei einer Verstopfung der engen Zuführbohrungen zu einem Aufheben der Rückstellkraft und damit zu einem Anstreifen des umlaufenden Ringes am festehenden Ring kommen kann.

Gemäß der DE-A-2 444 544 wird zur Vermeidung dieser Nachteile Sperrgas durch spiralförmige Nuten im umlaufenden oder nichtumlaufenden Dichtring dem Dichtspalt, in radialer Richtung betrachtet, von außen oder innen zugeführt, wobei gasdynamische Rückstellkräfte entstehen. Hierbei besteht der Nachteil, daß diese Rückstellkräfte drehzahlabhängig sind, so daß bei kleinen Drehzahlen zusätzlich ein über Drosselbohrungen erzeugtes statisches Gaspolster vorhanden sein muß.

Für eine Wellendichtung für Turbomaschinen ist zur Verringerung der Leckverluste des Arbeitsmediums in der DE-A-2 515 316 vorgeschlagen, die Wellendichtung durch ein elektronisch gesteuertes Magnetfeld von Magnetspulen in ihrer Lage zur Welle konzentrisch zu halten. Über die Ausführung der angesprochenen Ausbildung als radiale Spaltdichtung in Verbindung mit der konzentrischen Lage zur Welle ist nichts offenbart.

Weiterhin ist in der DE-A-1 675 354 der Gedanke angedeutet, den Dichtspalt durch zwischen Drosselbohrungen im Dichtring eingebettete, auf Abstoßung wirkende Dauermagnete zu erzeugen, ohne jedoch Hinweise zur technischen Ausführung zu geben.

Die bisher bekannten Ausführungen sind für eine radiale Wellendichtung, auf die neben dem Sperrmedium zusätzlich am nichtumlaufenden Dichtring angreifende elastische Rückstellkräfte einwirken, für extrem kleine Dichtspalte nicht geeignet, da bei einer Überlagerung der axial auf den Dichtspalt gerichteten Kräfte die erforderliche Gleichförmigkeit des Spaltes nicht eingehalten wird und die Gefahr des Anlaufens des mit der Welle umlaufenden Ringes besteht.

Der Erfindung liegt daher die Aufgabe zugrunde, die bei einer Wellendichtung auf den radialen Dichtspalt einwirkenden Kräfte derart aufeinander abzustimmen, daß die Funktion der Wellendichtung stets gewährleistet ist.

Diese Aufgabe wird bei einer Wellendichtung nach dem Oberbegriff des Anspruchs 1 erfindungsgemäß in der Weise gelöst, daß über Sensoren gesteuerte Elektromagnete auf den Dichtspalt einwirken, wobei die Elektromagnete im Dichtungsgehäuse in axialer Richtung beidseitig einer Schulter des nichtumlaufenden Dichtringes gegeneinander wirkend angeordnet sind und die von in der Dichtfläche des nichtumlaufenden Dichtringes angeordneten Sensoren geregelten magnetischen Kräfte der Elektromagnete die auf den nichtumlaufenden Dichtring axial wirkenden Fluidkräfte und die Rückstellkräfte des nachgiebigen und dichtenden Elements überlagern und so den vorgegebenen Dichtspalt einhalten.

Die zusätzlich auf den nichtumlaufenden Dichtring axial wirkenden Kräfte resultieren aus dem Dichtungsmedium und dem allseitig nachgiebigen Element, welches das Dichtungsgehäuse mit dem nichtumlaufenden Dichtring verbindet.

Nun kann zwar durch die bekannte Zuführung und Ableitung des Dichtungsmediums über Taschen bzw. über den Rand der Dichtringe, z. B. in spiralförmigen Zuführnuten, bezüglich der Abstandshaltung eine Redundanz zum Magnetsystem erreicht werden, die jedoch allein nicht ausreichend ist. Zusätzlich kann eine Redundanz im Magnetsystem selbst erzielt werden, wenn die elektronischen Regeleinrichtungen mehrfach parallel angeordnet sind.

Eine weitere Sicherung vor einem Anlaufen des umlaufenden Dichtrings kann dadurch erfolgen, daß das allseitig nachgiebige und dichtende Element bei Ausfall der Elektronik eine Zugkraft weg vom umlaufenden Dichtring auf den nichtumlaufenden Dichtring ausübt.

Der nichtumlaufende Dichtring wird im Normalfall von dem allseitig nachgiebigen und dichtenden Element radial in seiner Lage gehalten. In besonderen Fällen kann es jedoch zweckmäßig sein, eine zusätzliche radiale Führung anzubringen. Dazu kann am Umfang des nichtumlaufenden Dichtringes ein aerostatisches oder hydrostatisches Lager angeordnet sein. Es ist auch möglich, für die radiale Führung am Umfang des nichtumlaufenden Dichtringes Elektromagnete und magnetisierbare Gegenkörper einzusetzen.

Es ist auch möglich, für die Wellendichtung eine Druckstufung oder zwei unterschiedliche Sperrmedien vorzusehen. Dazu können am umlaufenden Dichtring mehrere Dichtspalte vorgesehen werden, beispielsweise je einer an jeder Stirnseite, die jeweils von einem nichtumlaufenden Dichtsystem der vorgeschriebenen Art begrenzt werden.

Im nichtumlaufenden Dichtring im Bereich des Dichtspaltes können zusätzlich Temperaturmeßfühler angeordnet werden. Mit den damit gemessenen Temperaturen wird ein Gradient der Temperatur nach der Zeit gebildet, der über eine elektronische Steuerung die Elektromagnete so beeinflußt, daß der vorgegebene Sollwert des konstant zu haltenden Dichtspalts verändert wird. Über den Umfang des nichtumlaufenden Dichtringes können verteilt mindestens drei Temperaturmeßfühler angeordnet sein.

Durch diese zuletzt genannten Maßnahmen wird die im Bereich des Dichtspalts auftretende Temperatur als zusätzlicher Parameter in die elektronisch-magnetische Regelung der Dichtspaltweite einbezogen, womit sich eine optimale Anpassung an die jeweiligen Betriebsbedingungen ergibt und die Betriebssicherheit der Wellendichtung wesentlich erhöht wird.

Der Vorteil der Wellendichtung gemäß der Erfindung besteht darin, daß infolge der Überlagerung der verschiedenen auf den nichtumlaufenden Dichtring einwirkenden Kräfte ein Anlaufen des umlaufenden Dichtringes sicher vermieden wird. Dabei wird, selbst bei Ausfall des Sperrgases bzw. der Sperrflüssigkeit, durch Regelung der elektromagnetischen Kräfte der vorgegebene Dichtspalt aufrechterhalten. Fällt umgekehrt die Elektronik aus, bewirkt die Zugkraft des allseitig nachgiebigen und dichtenden Elements, daß der nichtumlaufende Dichtring vom umlaufenden Dichtring weggezogen wird.

Da zur Erregung der Magnete nur eine geringe Energie erforderlich ist, kann die Magneteinrichtung auch zur Spaltsicherung eingesetzt werden, solange noch kein Dichtmedium anliegt, z. B. während des Transports und der Montage.

In der Zeichnung sind Ausführungsbeispiele der Erfindung dargestellt, die im folgenden näher erläutert werden.

Es zeigen :

Figur 1 einen Querschnitt durch eine Wellendichtung,

Figur 2 eine Ansicht II-II gemäß Figur 1,

Figur 3 einen Querschnitt durch eine Wellendichtung mit radialer Führung des nicht umlaufenden Dichtringes durch Elektromagnete,

Figur 4 einen Querschnitt durch eine Wellendichtung mit radialer Führung durch Gaslager und

Figur 5 einen Querschnitt einer Wellendichtung mit Doppeldichtung.

In den Figuren ist der Dichtspalt 1 begrenzt von dem mit der Welle umlaufenden Dichtring 2 und dem nichtumlaufenden Dichtring 5.

Der nichtumlaufende Dichtring 5 ist mittels eines dichtenden nachgiebigen Elements 3 mit dem Dichtungsgehäuse 4 verbunden. Dieses Element 3, beispielsweise ein Faltenbalg, übt auf den nichtumlaufenden Dichtring 5 eine axialgerichtete Kraft aus.

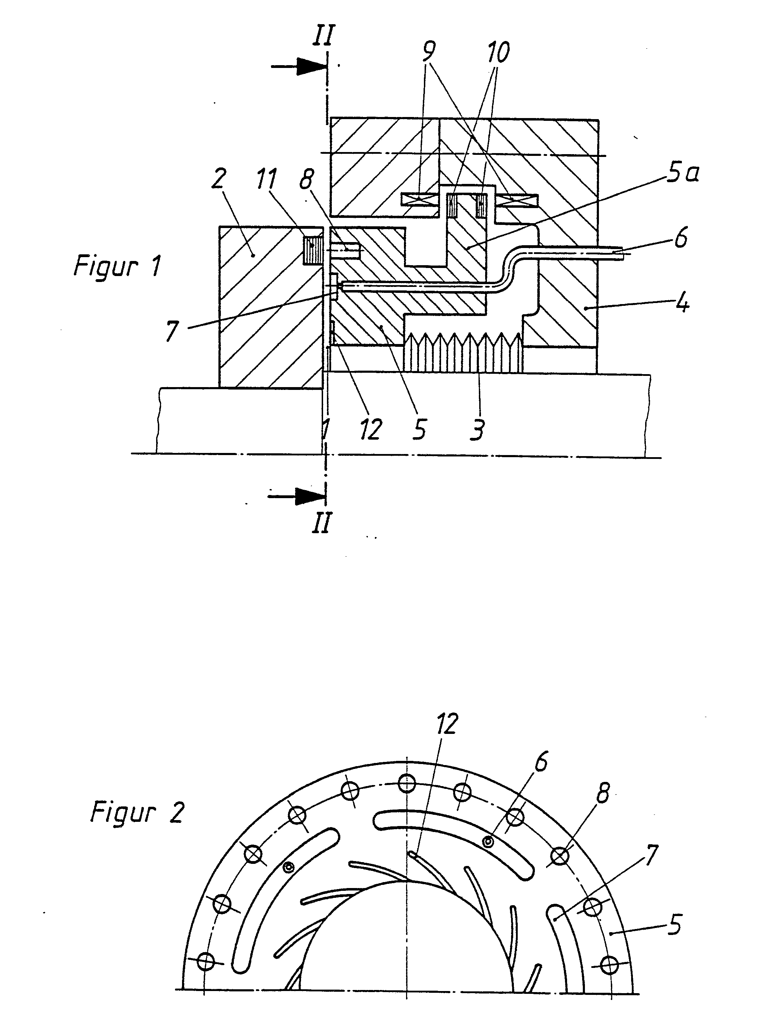

Die Zuführung des Dichtungsmediums erfolgt gemäß Figur 1 und 2 durch Zuführbohrungen 6 mit drosselartiger Verengung an der Einmündung in die zugehörigen Verteilungstaschen 7 im nichtumlaufenden Dichtring 5. Das Dichtungsmedium strömt somit in den Dichtspalt 1. In den spiralförmigen Nuten 12, welche in diesem Beispiel am Innenrand des nichtumlaufenden Dichtringes 5 angeordnet sind, wird zusätzlich bei hohen Drehzahlen ein dynamisches Druckpolster vom Dichtungsmedium erzeugt.

Im nichtumlaufenden Dichtring angeordnete Sensoren 8 und im umlaufenden Dichtring 2 eingebettete Einlagen 11 steuern elektronisch im Dichtungsgehäuse 4 befindliche Elektromagnete 9, welche im Zusammenwirken mit magnetisierbaren Gegenkörpern 10 auf den Dichtspalt 1 einwirken.

Die Elektromagnete 9 sind derart im Dichtungsgehäuse 4 angeordnet, daß sie gegeneinander wirkend in axialer Richtung beidseitig auf die in einer Schulter 5a des nichtumlaufenden Dichtringes 5 angeordneten magnetisierbaren Gegenkörper 10, die als Blechpakete ausgebildet sind, einwirken. Dadurch werden den auf den nichtumlaufenden Dichtring 5 wirkenden Kräften des Dichtungsmediums und des beweglichen Dichtungselementes 3 elektromagnetische Kräfte überlagert, welche unabhängig von den übrigen Kräften so über die Sensoren 8 im Dichtspalt 1 geregelt werden, daß der vorgegebene Dichtspalt 1 eingehalten wird.

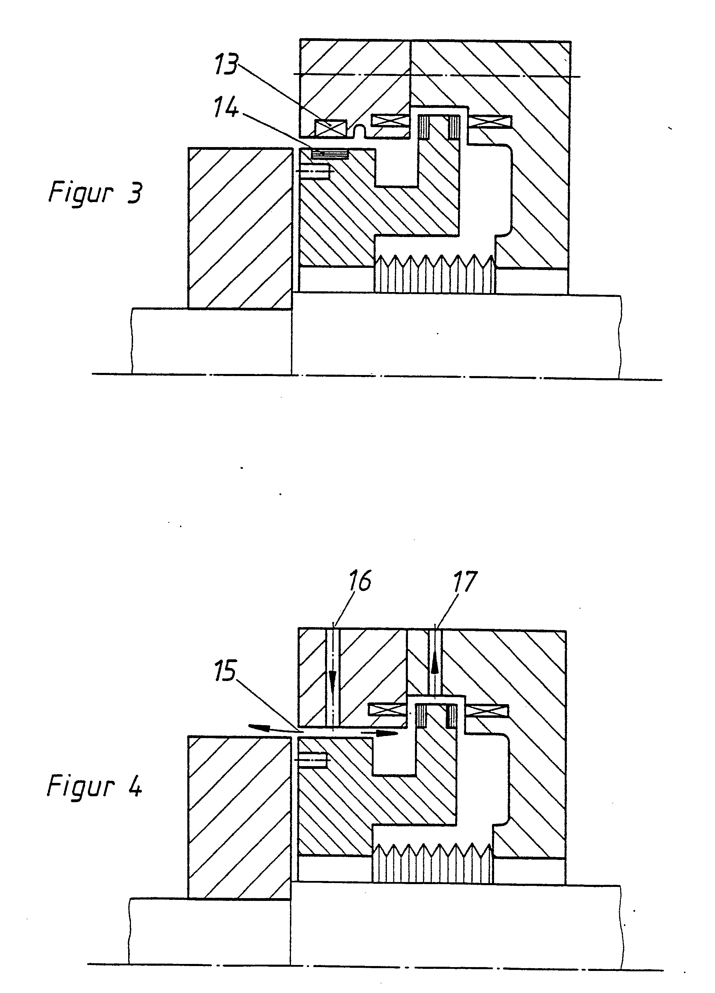

Zur radialen Führung des nichtumlaufenden Dichtringes 5 gegenüber dem Dichtungsgehäuse 4 dienen nach Figur 3 radial am Dichtungsgehäuse angeordnete Elektromagnete 13 und Blechpakete 14, die sich am nichtumlaufenden Dichtring 5 befinden. Diese Führung läßt sich nach Figur 4 auch durch radial angeordnete Gaslager 15 erzielen, die mit einer Gaszuführung 16 und einer Gasabführung 17 versehen sind.

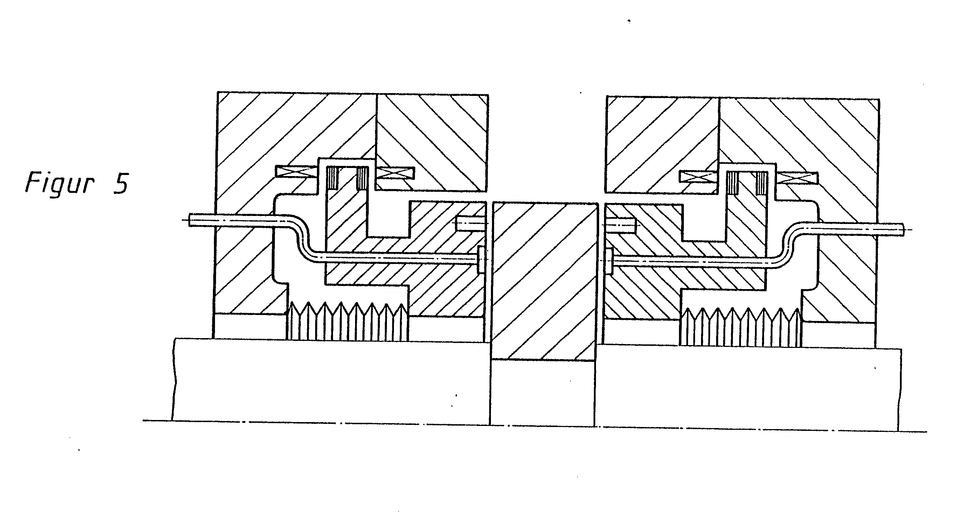

Figur 5 zeigt das in Figur 1 dargestellte Dichtungssystem als sogenannte Doppeldichtung.

## Patentansprüche

1. Wellendichtung mit radialem ebenen Dichtspalt (1), der von einem mit der Welle umlaufenden Dichtring (2) und einem über ein allseitig nachgiebiges und zugleich dichtendes Element (3) am Dichtungsgehäuse (4) befestigten nichtumlaufenden Dichtring (5) gebildet wird, wobei das Dichtungsmedium durch Zuführbohrungen (6) und zugehörige Verteilungstaschen (7) im nichtumlaufenden Dichtring (5) und/oder am äußeren oder inneren Umfang des umlaufenden Dichtrings (2) in den Dichtspalt (1) strömt, dadurch gekennzeichnet, daß über Sensoren (8) elektronisch gesteuerte Elektromagnete (9) auf den Dichtspalt (1) einwirken, wobei die Elektromagnete (9) im Dichtungsgehäuse (4) in axialer Richtung beidseitig einer Schulter (5a) des nichtumlaufenden Dichtringes (5) gegeneinander wirkend angeordnet sind und die von in der Dichtfläche des nichtumlaufenden Dichtringes (5) angeordneten Sensoren (8) geregelten magnetischen Kräfte der Elektromagnete (9) die auf den nichtumlaufenden Dichtring (5) axial wirkenden Fluidkräfte und die Rückstellkräfte des nachgiebigen und dichtenden Elements (3) überlagern und so den vorgegebenen Dichtspalt (1) einhalten.

2. Wellendichtung nach Anspruch 1, dadurch gekennzeichnet, daß die elektronischen Regeleinrichtungen mehrfach parallel (redundant) angeordnet sind.

3. Wellendichtung nach Anspruch 1, dadurch gekennzeichnet, daß das allseitig nachgiebige und dichtende Element (3) bei Ausfall der Elektronik eine Zugkraft weg vom umlaufenden Dichtring (2) auf den nichtumlaufenden Dichtring (5) ausübt.

4. Wellendichtung nach Anspruch 1, dadurch gekennzeichnet, daß am Umfang des nichtumlaufenden Dichtringes (5) ein radial angeordnetes aerostatisches oder hydrostatisches Lager (15) vorgesehen ist.

5. Wellendichtung nach mindestens einem der Ansprüche 1 bis 4, dadurch gekennzeichnet, daß an einer oder beiden Stirnseiten des umlaufenden Dichtringes (2) ein oder mehrere Dichtspalte (1) vorgesehen sind, die von einem nichtumlaufenden Dichtsystem begrenzt sind.

6. Wellendichtung nach Anspruch 1, dadurch gekennzeichnet, daß im nichtumlaufenden Dichtring (5) im Bereich des Dichtspaltes (1) zusätzlich Temperaturmeßfühler angeordnet sind und mit den damit gemessenen Temperaturen ein Gradient der Temperatur nach der Zeit gebildet wird, der über eine elektronische Steuerung die Elektromagnete (9) so beeinflußt, daß der vorgegebene Sollwert des konstant zu haltenden Dichtspaltes (1) verändert wird.

7. Wellendichtung nach Anspruch 6, dadurch gekennzeichnet, daß über den Umfang des nichtumlaufenden Dichtringes (5) verteilt mindestens drei Temperaturmeßfühler angeordnet sind.

**Claims**

1. Shaft packing with a radial plane sealing gap (1), constituted by a gasket (2) rotating with the shaft and by a non-rotating gasket (5) fixed on the sealing housing (4) via a universally resilient and at the same time sealing element (3), the sealing medium flowing through feed bores (6) and associated distributing pockets (7) in the non-rotating gasket (5) and/or on the outer or inner periphery of the rotating gasket (2) into the sealing gap (1), characterised in that electronically controlled electro magnets (9) act through sensors (8) on the sealing gap (1), the electro magnets (9) being disposed in the sealing housing (4) and adapted to act in opposition to one another in an axial direction on both sides of a shoulder (5a) of the non-rotating gasket (5), the magnetic forces of the electro magnets (9) regulated by sensors (8) disposed in the sealing surface of the non-rotating gasket (5) being superimposed on the fluid forces acting axially on the non-rotating gasket (5) and the restoring forces of the resilient and sealing element (3) and so maintaining the given sealing gap (1).

2. Shaft seal according to Claim 1, characterised in that the electronic regulating means are multiple means disposed parallel (redundant).

3. Shaft seal according to Claim 1, characterised in that the universally resilient and sealing element (3), if the electronic devices fail, exerts a tractive force away from the rotating gasket (2) onto the non-rotating gasket (5).

4. Shaft seal according to Claim 1, characterised in that on the periphery of the non-rotating gasket (5) there is a radially disposed aerostatic or hydrostatic bearing (15).

5. Shaft seal according to at least one of Claim 1 to 4, characterised in that on one or both end faces of the rotating gasket (2) there is/are one or a plurality of sealing gaps (1) defined by a non-rotating sealing system.

6. Shaft seal according to Claim 1 characterised in that additionally temperature measuring sensors are located in the non-rotating gasket (5), in the region of the sealing gap (1), the temperatures measured therewith forming a gradient of temperature in relation to time which, through an electronic control means, so influences the electro magnets (9) that the preset desired value of the sealing gap (1) which is to be maintained constant, is varied.

7. Shaft seal according to Claim 6, characterised in that three temperature measuring sensors are distributed over the periphery of the non-rotating gasket (5).

**Revendications**

1. Garniture étanche d'arbre avec un interstice d'étanchéité radial plan (1), qui est délimité par un anneau d'étanchéité (2) tournant avec l'arbre et par un anneau d'étanchéité non tournant (5) fixé sur le boîtier (4) de la garniture étanche par l'intermédiaire d'un élément déformable (3) en tous sens et assurant en même temps l'étanchement, le fluide d'étanchement s'écoulant dans l'interstice d'étanchéité (1) par l'intermédiaire de perçages d'amenée (6) et de poches de répartition (7) qui leur sont associées dans l'anneau d'étanchéité non tournant (5) et/ou sur la périphérie externe ou interne de l'anneau tournant (2), garniture étanche caractérisée en ce que des électro-aimants (9) commandés électroniquement par l'intermédiaire de détecteurs (8) agissent sur l'interstice d'étanchéité (1), ces électro-aimants (9) étant disposés de façon à agir en sens inverse l'un de l'autre dans le boîtier (4) de la garniture des deux côtés, en direction axiale, d'un épaulement (5a) de l'anneau d'étanchéité non tournant (5), et les forces magnétiques des électro-aimants (9), réglées par les détecteurs (8) disposés sur la surface d'étanchéité de l'anneau d'étanchéité non tournant (5), se superposent aux efforts du fluide agissant axialement sur l'anneau d'étanchéité non tournant (5) et aux efforts de rappel de l'élément déformable et assurant l'étanchement, et elles maintiennent ainsi l'interstice d'étanchéité (1) prédéfini.

2. Garniture étanche d'arbre selon la revendication 1, caractérisée en ce qu'il y a plusieurs dispositifs électroniques de réglage disposés en parallèle (de façon redondante).

3. Garniture étanche d'arbre selon la revendication 1, caractérisée en ce que l'élément (3) déformable en tous sens et assurant l'étanchement, exerce sur l'anneau d'étanchéité non tournant (5), en cas de défaillance de l'électronique, un effort de traction qui a tendance à l'écarter de l'anneau d'étanchéité tournant (2).

4. Garniture étanche d'arbre selon la revendication 1, caractérisée en ce qu'à la périphérie de l'anneau d'étanchéité non tournant (5), il est prévu un palier aérostatique ou bien hydrostatique (15) disposé radialement.

5. Garniture étanche d'arbre selon au moins une des revendications 1 à 4, caractérisée en ce que sur l'une ou les deux faces frontales de l'anneau d'étanchéité tournant (2), il est prévu un ou plusieurs interstices d'étanchéité (1) qui sont délimités par un système d'étanchéité non tournant.

6. Garniture étanche d'arbre selon la revendication 1, caractérisée en ce que des sondes de mesure de température sont en outre disposées sur l'anneau d'étanchéité non tournant (5) dans la zone de l'interstice d'étanchéité (1), et qu'avec les températures ainsi mesurées, il est établit un gradient de température en fonction du temps, qui par l'intermédiaire d'une commande électronique, agit sur les électro-aimants (9) de façon que la valeur de consigne prédéfinie de l'interstice d'étanchéité (1) devant être maintenu constant, soit modifiée.

7. Garniture étanche d'arbre selon la revendication 6, caractérisée en ce qu'il est prévu au moins trois sondes de mesure de la température réparties sur la périphérie de l'anneau d'étanchéité non tournant (5).

Figur 1

Figur 2

Figur 3

Figur 4

Figur 5